# EUROPEAN PATENT SPECIFICATION

(11) **EP 3 048 711 B1**
(45) Date of publication and mention of the grant of the patent: **21.07.2021**
(21) Application number: 16152330.3
(22) Date of filing: 22.01.2016
(51) Int. Cl.: H02K 41/03, H02K 3/493

(54) **TECHNIQUE FOR REDUCING COGGING IN CLOSED TRACK LINEAR MOTORS**
TECHNIK ZUR REDUZIERUNG DER ZAHNUNG IN LINEARMOTOREN MIT GESCHLOSSENEM UMLAUF
TECHNIQUE PERMETTANT DE RÉDUIRE LE CRANTAGE DANS DES MOTEURS LINÉAIRES À PISTE FERMÉE

(30) Priority: 23.01.2015 US 201514604178
(43) Date of publication of application: 27.07.2016
(73) Proprietor: Rockwell Automation Technologies, Inc., Mayfield Heights, OH 44124 (US)
(72) Inventor: FLORESTA, John, Commack, New York 11725 (US)
(74) Representative: Grünecker Patent- und Rechtsanwälte PartG mbB

(56) References cited:
- EP-A2- 0 398 746
- EP-A2- 2 779 390
- CH-A- 147 913
- JP-A- H07 227 053
- JP-A- H10 290 546
- JP-A- 2003 032 994
- US-A1- 2004 217 659
- US-A1- 2010 253 176
- US-B1- 6 844 651

## Description

### BACKGROUND

The present disclosure relates generally to controlled motion systems and, more specifically, to controlled motion systems that utilize electromagnetic linear motors and a technique of reducing cogging in such motors.

This section is intended to introduce the reader to various aspects of art that may be related to various aspects of the present disclosure, which are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

There are many processes that benefit from providing the controlled motion of one object relative to another. For example, assembly lines have been used for well over 100 years to facilitate rapid and efficient production. In a typical assembly line, an article being manufactured moves from one station to another, typically via a conveyor belt or by some other motorized means. As the semi-finished article moves from one work station to another, parts are added or processes are performed until the final product is completed. In addition to this type of assembly automation, controlled motion systems may also be used for packaging, transporting objects, machining, etc. Conveyor belts typically use an endless belt that is stretched between a rotary motor and one or more idlers, which results in a relatively high number of moving parts and associated mechanical complexity. Moreover, each item on a conveyor belt necessarily moves at the same speed and in the same spaced apart relationship relative to other items on the conveyor belt. Similarly, ball screws and many other types of linear motion systems also rely upon rotary motors to produce linear motion, and they suffer from similar problems.

The application of controlled electromagnetic motion systems to a wide variety of processes, such as those mentioned above, provides the advantage of increasing both the speed and flexibility of the process. Such controlled motion systems may use linear motors that employ a magnetic field to move one or more elements along a path. The movable element is sometimes known as a carriage, pallet, tray, or mover, but all such movable elements will be referred to here collectively as a "mover." Such linear motors reduce or eliminate the need for gear heads, shafts, keys, sprockets, chains and belts often used with traditional rotary motors. This reduction of mechanical complexity may provide both reduced cost and increased speed by virtue of reducing inertia, compliance, damping, friction and wear normally associated with more conventional motor systems. Further, these types of controlled motion systems may also provide greater flexibility than rotary motor systems by allowing each individual mover to be independently control led along its entire path.

Electromagnetic linear motor systems typically have some sections that are straight and some sections that are curved, so that the movers can follow the path best suited for the particular application. Indeed, it should be appreciated that the term "linear" as used herein is meant to refer to electromagnetic motor systems that use electric motors that have their stators and rotors "unrolled" so that instead of producing a torque or rotation, they produce a force along their length. Hence, a linear controlled motion system may include not only straight portions, but also portions that curve side to side, upwardly, or downwardly, to form a path to move a mover from one position to another, while still being considered to be formed from "linear" motor sections (as opposed to rotary motors).

In fact, it is because electromagnetic linear motors have both straight sections and curved sections, such as the linear motor disclosed in U.S. Patent No. 6,803,681, that certain problems arise. Specifically, the straight sections and the curved section represent two related, but distinct, motor topologies, and these different motor topologies tend to produce different cogging forces. Cogging force is a disturbance in the magnetic field generated by the stator of the linear motor. It results from variations in the reluctance of the motor air gap as the magnets of the motors pass over the stator. The magnets will always seek to locate in their preferred magnetic positions over the magnetically permeable teeth, which are the positions of minimal reluctance, in the direction of motion. The presence of the teeth, and particularly the slots between the teeth that are present to allow the electromagnetic coil to be wound around each tooth, creates air gap reluctance variation in the stator. For this reason, motor designers typically try to minimize the slot opening between teeth to minimize the variation in air gap reluctance.

However, as mentioned above, the straight sections and the curved sections of a linear motor have distinct topologies relative to cogging performance. In other words, with regard to cogging force and the developed motor force, each topology performs uniquely due to the differences in interaction between the magnetic mover and the respective stators. This makes optimization of the cogging force extremely difficult. For example, the air gap between the magnetic mover and the stator teeth is constant when interacting with a straight section, but the air gap varies when interacting with a curved section, particularly if the curved section does not maintain a constant radius. Common techniques for reducing cogging in permanent magnetic motors, e.g., pulse shifting, pulse shaping, pulse scewing, adjust poll count, etc., are largely ineffective in trying to find a solution that is optimal for both straight sections and curved sections. In other words, optimizing one topology typically means worsening the cogging performance of the other topology. Accordingly, it is desirable to have a technique that improves the cogging performance of both straight sections and curved sections of an electromagnetic linear motor.

US 2004/217659 A1 discloses a stack structure, and a linear brushless DC motor that incorporates such a stuck structure. The top portion of each tooth has two additional notches to accommodate magnetic wedges.

JP 2003 032994 A discloses that reactive force suppressing plates, made of magnetic material, are fixed in slots and spaces between tooth parts and wall parts, and an armature is formed. A linear motor includes the armature.

EP 2 779390 A2 discloses a linear controlled motion system, such as a system having a track formed from one or more track sections, and having at least one mover mounted to the track.

US 2010/253176 A1 discloses an electric machine with a stator with teeth carrying coils for concentrated windings.

JP H07 227053 A discloses that a magnetic wedge is manufactured by using a magnetic material prepared by mixing amorphous magnetic particles having high magnetic permeability with a synthetic resin.

### SUMMARY

It is therefore the object of the present invention to provide an improved controlled motion system and a corresponding stator.

This object is solved by the subject matter of the independent claim.

Preferred embodiments are defined by the dependent claims.

A summary of certain embodiments disclosed herein is set forth below. It should be understood that these aspects are presented merely to provide the reader with a brief summary of these certain embodiments and that these aspects are not intended to limit the scope of this disclosure. Alterations and/or modifications of the described embodiments are contemplated as being alternative forms of the invention as far as they do not depart from the scope of the invention, which is defined by the appended claims.

It has been found that by bridging the slots between teeth on the stator with a magnetically permeable material, a substantial improvement of cogging force can be achieved. The bridging of the teeth reduces the variation in air gap reluctance and thereby reduces the cogging force for both straight sections and curved sections.

### BRIEF DESCRIPTION OF THE DRAWINGS

Various aspects of this disclosure may be better understood upon reading the following detailed description and upon reference to the drawings in which:
FIG. 1 is a schematic representation of a linear controlled motion transport system including a linear magnetic motor system, a track formed from at least two track sections, including both straight sections and curved sections, and having at least one mover effective for moving along the track;
FIG. 2 is a schematic illustration of a side view of a track section of the linear motion track of FIG. 1 showing a plurality of electromagnet coils coupled to a stator and a mover mounted for movement along the track section;
FIG. 3 is a schematic illustration of a perspective view of a mover having reaction elements mounted thereon which cooperate with the activation elements positioned along the track of FIG. 1 and further showing a control sensor for providing a signal for use by a control system in moving the mover along the track;
FIG. 4 is a schematic illustration showing gaps between adjacent teeth and between the two adjacent track sections that can create a disturbance, change, or weakening in the magnetic field;
FIG. 5 is an illustration of a block diagram of an example of the control system interacting with the motor system and positioning system of the control circuitry;
FIG. 6 is a schematic illustration of a perspective view of a portion of a stator of a linear motor having magnetically permeable bridge elements that are insertable between adjacent teeth of the stator; and
FIG. 7 is a schematic illustration of a side view of the stator of FIG. 6 showing the magnetically permeable bridge elements inserted between adjacent teeth on the stator.

### DETAILED DESCRIPTION OF SPECIFIC EMBODIMENTS

One or more specific embodiments will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure. Alterations and/or modifications of the described embodiments are contemplated as being alternative forms of the invention as far as they do not depart from the scope of the invention, which is defined by the appended claims.

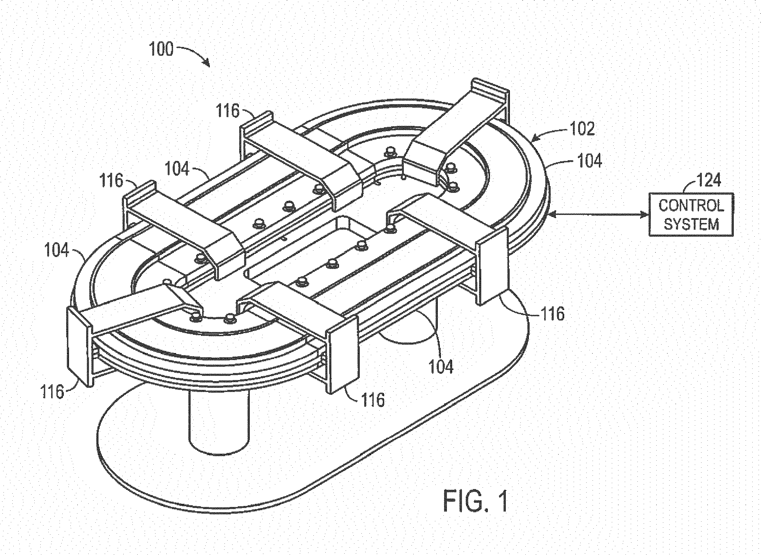

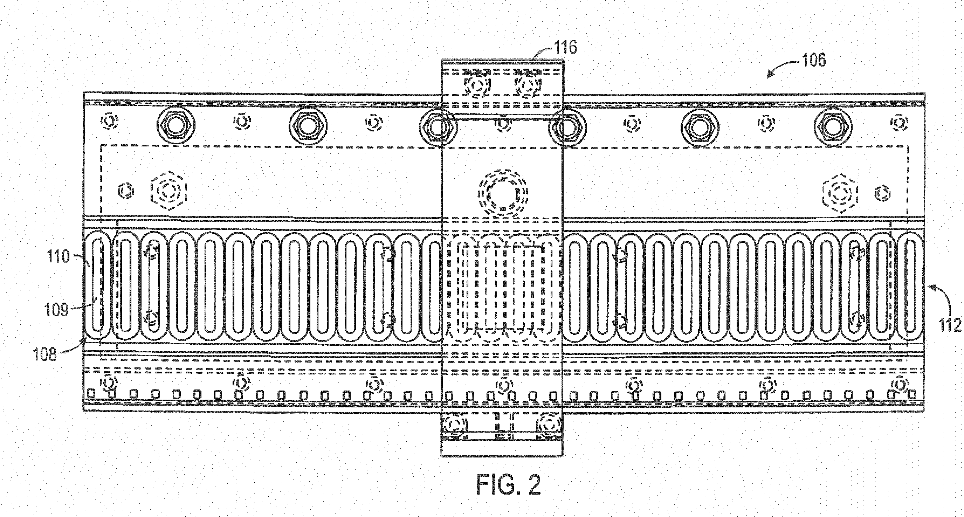

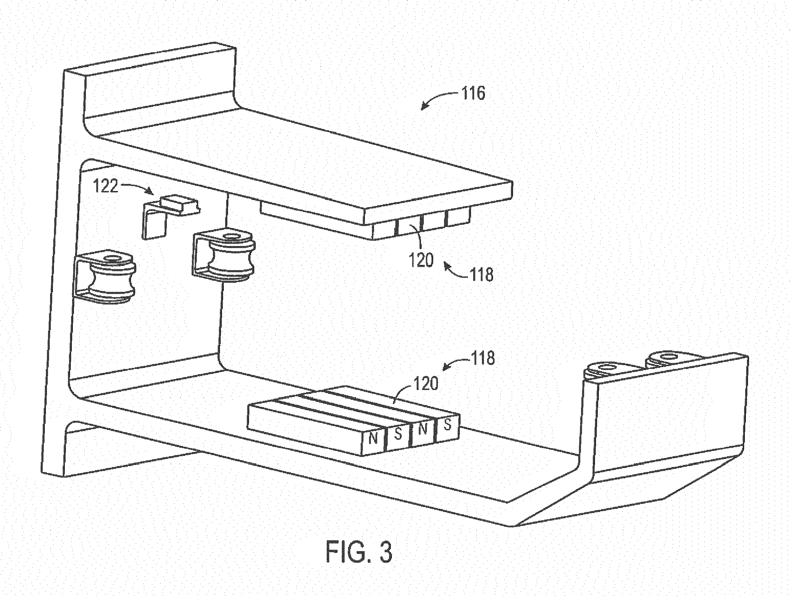

Referring to FIGS. 1 through 4, a schematic representation of a linear controlled motion system 100 is illustrated. It should be appreciated that the term "linear" as used herein is meant to refer to electromagnetic motor systems that use electric motors that have their stators and rotors "unrolled" so that instead of producing a torque or rotation, they produce a force along their length. Hence, a linear controlled motion system 100, such as the oval system illustrated in FIG. 1, may include portions that curve side to side, upwardly, or downwardly, to form a path to move a mover from one position to another, while still being considered to be formed from "linear" motor sections (as opposed to rotary motors).

As illustrated, the linear controlled motion system may include a track 102 formed from two or more interconnected track sections 104 having a magnetic motor system 106 having activation elements 108, such as a plurality of electromagnet coils 110 coupled to teeth 109 of a stator 112 mounted along the track sections 104. The electromagnet coils 110 operate to create an electromagnetic field illustrated by magnetic flux lines 114. Coupled to the track 102 is at least one mover 116 mounted to permit travel along the track 102. Each mover 116 is controlled and may generally move independent of other movers. Reaction elements 118 may include one or more magnets 120, such as rare-earth permanent magnets. The reaction elements 118 on each mover 116 cooperate with the activation elements 108 positioned along the track 102 to produce relative movement therebetween when the activation elements 108 are energized and/or de-energized. Each mover 116 further includes a control sensor 122 that provides a signal for use by a control system 124 for operating the motor system 106 by energizing and/or de-energizing the activation elements 108 positioned along the track 102 thereby producing controlled movement of each mover 116.

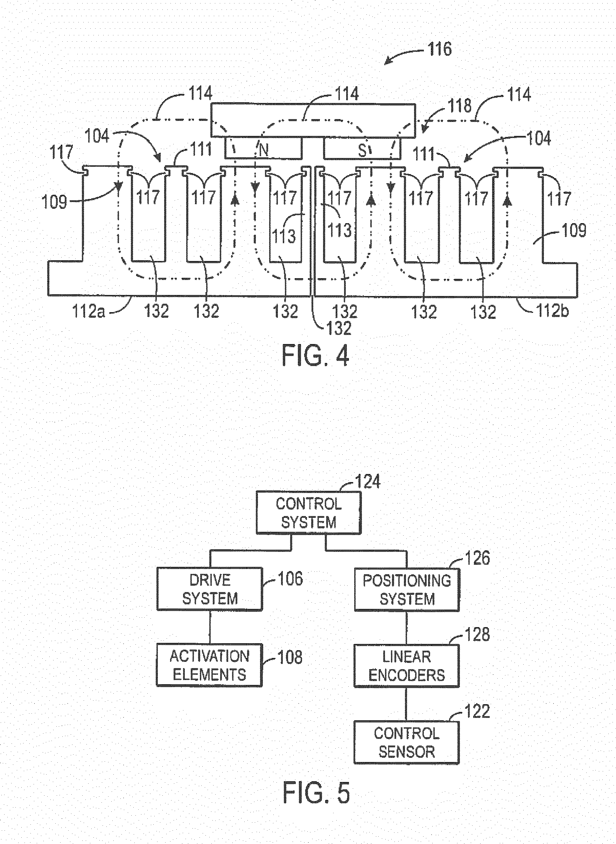

In one embodiment, as illustrated in FIG. 5, the controlled motion system 100 includes a positioning system 126 that employs a plurality of linear encoders 128 spaced at fixed positions along the track 102, and that cooperate with the control sensor 122 mounted on each mover 116 to provide signals to the control system 124 for sensing each mover's position along the track 102. Each control sensor 122 may include a linear encoder, such as an "incremental absolute" position encoder, that is coupled to the control system 124, and that operates to sense and count incremental pulses (or digitize sine/cosine signals to create these pulses) after a mover 116 has traveled past a reference point (not shown)).

Referring to FIG. 4, a portion of the track 102 is shown having two adjacent interconnected track sections 104 and a plurality of electromagnetic coils 110 formed along stators 112 that are mounted along the track sections 104, and that operate to create an electromagnetic field mounted along each track section 104, as illustrated by magnetic flux lines 114 forming a closed loop with the mover 116 and the adjacent track sections 104. As shown, a gap 132, such as an air gap, exists between adjacent teeth 109 and 111 and between the end teeth 113 of the track sections 104. A change in the air gap reluctance occurs across each of the gaps 132. This change in the air gap reluctance creates a cogging force that is problematic in that it may lead to lost performance, noise, false readings, or unwanted interaction of movers along the track 102. Further, when a mover 116 experiences a change or weakening in the magnetic field during operation of the control motion system 100, the control sensor 122 may sense this change or weakening such that the counting process performed by the control system 124 may be lost or the pulse counting disrupted. Such disruptions may also require the movers 116 to be driven back to a reference point or home position to initialize or reset the counting process.

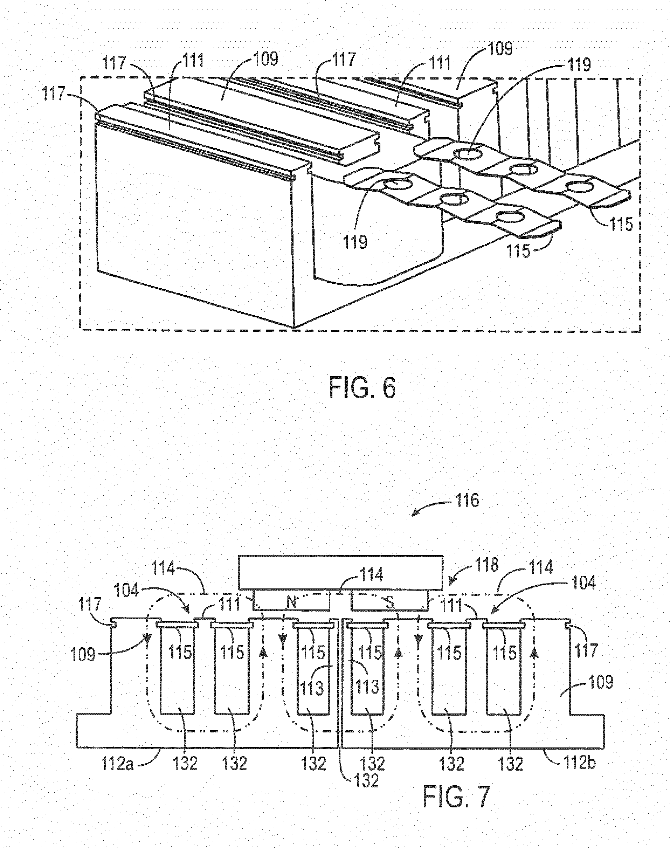

In an example which is not part of the invention, bridge elements 115 may be inserted between adjacent teeth 109, 111, and 113 to reduce the variation in air gap reluctance and, thereby, reduce the cogging force, as illustrated in FIGs. 6 and 7. To facilitate ease of manufacture, the teeth may include slots 117 that run along the length of the upper portion of each tooth 109, 111, and 113. The slots 117 are advantageously sized so that the bridge elements may be slid into the slots 117 of adjacent teeth and subsequently held in place by a sufficient amount of frictional force. As illustrated in FIG. 6, the bridge elements 115 may have a corrugated shape and may include one or more apertures 119. The corrugated shape may facilitate the placement and holding of the bridge elements 115 while the apertures 119 may facilitate encapsulation of the assembly as described in detail in U.S. Patent No. 6,844,651. However, it should be appreciated that the bridge elements 115 need not be corrugated or contain apertures. Indeed, the bridge elements 115 may be relatively flat with no apertures.

According to the invention, bridge elements 115 are made of a material having a magnetic permeability of 5.0 x 10⁻³ H/m or greater. Materials of this type include electrical steel (5.0 x 10⁻³ H/m), iron (6.3 x 10⁻³ H/m (99.6% pure)), permalloy (1.0 x. 10⁻² H/m), cobalt-iron (2.3 x 10⁻² H/m), nanoperm (1.0 x 10⁻¹ H/m), pure iron (2.5 x 10⁻¹ H/m (99.95% pure or greater)), or metaglas (1.26 x 10 H/m). Materials of this type are vastly superior to materials having a lower magnetic permeability, such as nickel, stainless steel, or air. Indeed, in one example, a motor using iron bridge elements 115 exhibited a small decrease in force of about 10-15%, but the cogging was significantly decreased by about 50% as compared to a motor having no bridge elements. However, it is believed that the use of such bridge elements 115 made of materials of the type described above will result in small decreases in force of typically 1%-10% and result in decreases in cogging of at least 20% as compared to a motor having no bridge elements.

In an example which is not part of the invention wherein the bridge elements 115 are inserted between the teeth 109, 111 and 113 of the stator 112, a percentage of the magnetic flux lines 114 flow through the bridge elements 115. As a result, the mover 116 encounters a magnetic field that is more consistent as it moves along the stator 112, thus reducing the cogging effects. Of course, as mentioned above, the use of the magnetically permeable bridge elements 115 to reduce the cogging effects also tends to cause some amount of decrease in the moving force provided by the motor. Hence, the bridge elements 115 may be selected and designed to provide the desired balance between reduced force and reduced cogging for any particular motor application. For example, the thickness of the bridge elements 115, the material from which they are made, the thickness of the teeth 109, 111, 113, and the size of the air gaps between the teeth may all be considered in reaching a design that provides the desired force v. cogging characteristics. Typically, suitable bridge elements 115 will have a magnetic permeability as discussed above and they will be less than 1/5 the thickness of the teeth. Indeed, in the example mentioned above, the thickness of the bridge elements 115 were about 1/10 the thickness of the teeth.

In the invention, a solid sheet of magnetically permeable material as defined in claim 1 is used as a bridge element instead of the plurality of individual bridge elements 115. Though not shown in the figures, such a sheet is disposed on top of the teeth 109, 111, 113. The sheet may be affixed to the teeth in any suitable manner, e.g., fasteners, adhesive, etc. Similar to the variables discussed above with respect to the individual bridge elements 115, the thickness of the sheet and the material from which it is made may be selected relative to the characteristics of the stator 112 to provide the desired force v. cogging characteristics.

The specific embodiments described above have been shown by way of example, and it should be understood that these embodiments may be susceptible to various modifications and alternative forms. It should be further understood that the claims are not intended to be limited to the particular forms disclosed, but rather to cover all modifications, equivalents, and alternatives falling within the scope of the independent claim.

## Claims

1. A controlled motion system (100) comprising:
a track (102) comprising a linear magnetic motor (106) having a stator (112), wherein the stator comprises:
a base having a plurality of teeth (109, 111, 113), wherein at least some of the plurality of teeth include electromagnetic coils (110) configured to produce a magnetic flux (114), and
a bridge element to reduce variation in the air gap reluctance, the bridge element being a sheet disposed on top of the plurality of teeth of the stator, and the bridge element being made of a material having a magnetic permeability of 5.0 x 10-3 H/m or greater; and
one or more movers (116) mounted to move along the track by utilizing the magnetic flux.

2. The controlled motion system (100) of claim 1, wherein the bridge element provides a substantially consistent magnetic field between the mover (116) and the plurality of teeth (109, 111, 113) over which the mover moves.

3. The controlled motion system (100) of claim 1 or 2, wherein the bridge element is less than 1/5 as thick as each of the plurality of teeth.

4. The controlled motion system (100) of one of claims 1 to 3, wherein the bridge element is made from electrical steel, iron, permalloy, cobalt-iron, nanoperm, pure iron, or metaglas.

5. The controlled motion system (100) of one of claims 1 to 4, wherein the track (102) includes straight sections and curved sections.

## Patentansprüche

1. System (100) für gesteuerte Bewegung, das umfasst:
eine Bahn (102), die einen magnetischen Linearmotor (106) mit einem Stator (112) umfasst, wobei der Stator umfasst:
eine Basis mit einer Vielzahl von Zähnen (109, 111, 113), wobei wenigstens einige der Vielzahl von Zähnen elektromagnetische Spulen (110) enthalten, die zum Erzeugen eines Magnetflusses (114) ausgeführt sind, sowie
ein Brückenelement zum Verringern von Änderung der Luftspalt-Reluktanz, wobei das Brückenelement eine Platte ist, die über der Vielzahl von Zähnen des Stators angeordnet ist, und das Brückenelement aus einem Material mit einer magnetischen Permeabilität von 5,0 x 10-3 H/m oder darüber besteht; und
eine oder mehrere Bewegungseinrichtung/en (116), die so installiert ist/sind, dass sie sich unter Ausnutzung des Magnetflusses entlang der Bahn bewegt/bewegen.

2. System (100) für gesteuerte Bewegung nach Anspruch 1, wobei das Brückenelement ein im Wesentlichen konsistentes Magnetfeld zwischen der Bewegungseinrichtung (116) und der Vielzahl von Zähnen (109, 111, 113) erzeugt, über die sich die Bewegungseinrichtung bewegt.

3. System (100) für gesteuerte Bewegung nach Anspruch 1 oder 2, wobei das Brückenelement weniger als 1/5 so dick ist wie jeder der Vielzahl von Zähnen.

4. System (100) für gesteuerte Bewegung nach einem der Ansprüche 1 bis 3, wobei das Brückenelement aus Elektrostahl, Eisen, Permalloy, Kobalt-Eisen, Nanoperm, Reineisen oder Metaglas besteht.

5. System (100) für gesteuerte Bewegung nach einem der Ansprüche 1 bis 4, wobei die Bahn (102) gerade Abschnitte und gekrümmte Abschnitte einschließt.

## Revendications

1. Système de mouvement contrôlé (100) comprenant :
une piste (102) comprenant un moteur magnétique linéaire (106) présentant un stator (112), dans lequel le stator comprend :
une base présentant une pluralité de dents (109, 111, 113), dans lequel au moins certaines de la pluralité de dents incluent des bobines électromagnétiques (110) configurées pour produire un flux magnétique (114), et
un élément de pont pour réduire une variation dans la reluctance de l'entrefer, l'élément de pont consistant en un film disposé sur le dessus de la pluralité de dents du stator, et l'élément de pont étant constitué d'un matériau présentant une perméabilité magnétique de 5,0 x 10-3 H/m ou supérieure ; et
un ou plusieurs éléments mobiles (116) installés pour se déplacer le long de la piste en utilisant le flux magnétique.

2. Le système de mouvement contrôlé (100) de la revendication 1, dans lequel l'élément de pont fournit un champ magnétique substantiellement homogène entre l'élément mobile (116) et la pluralité de dents (109, 111, 113) sur lequel l'élément mobile se déplace.

3. Le système de mouvement contrôlé (100) de la revendication 1 ou 2, dans lequel l'élément de pont est inférieur à 1/5 en épaisseur à chacune de la pluralité de dents.

4. Le système de mouvement contrôlé (100) de l'une des revendications 1 à 3, dans lequel l'élément de pont est constitué de fer doux, fer, permalloy, alliage fercobalt, nanoperm, fer pur ou metaglas.

5. Le système de mouvement contrôlé (100) d'une des revendications 1 à 4, dans lequel la piste (102) inclut des sections droites et des sections courbes.
